(19) Europäisches Patentamt
European Patent Office
Office européen des brevets

(11) **EP 4 786 231 A1**

(12) **EUROPEAN PATENT APPLICATION**
published in accordance with Art. 153(4) EPC

(43) Date of publication:
**05.08.2026 Bulletin 2026/32**

(21) Application number: **24881617.5**

(22) Date of filing: **23.10.2024**

(51) International Patent Classification (IPC):
*B60J 1/02* (2006.01)       *B60J 1/00* (2006.01)
*B60R 21/34* (2011.01)      *C03C 27/12* (2006.01)
*B32B 17/10* (2006.01)      *B32B 27/30* (2006.01)
*B32B 27/40* (2006.01)      *B32B 7/12* (2006.01)
*B32B 33/00* (2006.01)      *B32B 37/06* (2006.01)
*B32B 37/10* (2006.01)      *B32B 1/00* (2024.01)
*B32B 38/00* (2006.01)      *B32B 38/14* (2006.01)

(86) International application number:
**PCT/CN2024/126610**

(87) International publication number:
**WO 2025/087252 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **24.10.2023   CN 202311384231**

(71) Applicant: **Fuyao Glass Industry Group Co., Ltd.
Fuqing, Fujian 350300 (CN)**
(72) Inventors:
• **GUO, Yong**
  **Fuqing, Fujian 350300 (CN)**
• **LI, Weijun**
  **Fuqing, Fujian 350300 (CN)**
• **CHEN, An**
  **Fuqing, Fujian 350300 (CN)**
• **ZHANG, Canzhong**
  **Fuqing, Fujian 350300 (CN)**

(74) Representative: **Gill Jennings & Every LLP
The Broadgate Tower
20 Primrose Street
London EC2A 2ES (GB)**

(54) **FRONT WINDSHIELD, MANUFACTURING METHOD THEREFOR, AND VEHICLE**

(57)    A front windshield (200), a manufacturing method therefor, and a vehicle. The front windshield (200) comprises: an outer glass layer (1) having a first surface (11) and a second surface (12) arranged opposite to each other; an inner glass layer (3) having a third surface (31) and a fourth surface (32) arranged opposite to each other; and an intermediate thermoplastic layer (2) sandwiched between the second surface (12) and the third surface (31). The front windshield (200) is provided with a first weakened area (203). An adult headform impactor impacts the first weakened area (203) so that the first weakened area (203) is broken, and the adult headform impactor impacts a dashboard (100) after the first weakened area (203) is broken. The adult headform impactor has a first speed V1 when coming into contact with the first surface (11) of the first weakened area (203), the adult headform impactor has a second speed V2 when the fourth surface (32) of the first weakened area (203) is broken, and V1 and V2 satisfy: V1=11.1 ±0.2 m/s, and V1-V2=0.3-2.2 m/s.

FIG. 2

## Description

This application claims priority to Chinese Patent Application No. 202311384231.2, entitled "Front Windshield, Manufacturing Method Thereof and Vehicle", filed with China National Intellectual Property Administration on October 24, 2023, the entire disclosure of which is incorporated herein by reference.

## TECHNICAL FIELD

The present application relates to the field of glass technologies, and in particular, to a front windshield, a manufacturing method thereof and a vehicle.

## BACKGROUND

With a rapid development of social economy and an update and iteration of an automobile industry, pedestrian-vehicle collisions caused by a right of way get more serious and have a sharply increased number. Pedestrian accidents account for 20% of all the traffic accidents, a mortality rate thereof reaches 30%, and injuries caused by impacts of the heads of pedestrians on front windshields are most common. However, a safety design of a conventional front windshield is mainly focused on protecting a driver and passengers in a vehicle, potentially causing severe primary head injuries to pedestrians.

For this reason, the front windshield needs to be subjected to a related head test to ensure that the front windshield can be properly broken to protect the head of the pedestrian. However, if a breakage degree of the front windshield is excessively large, the head of the pedestrian may further impact a vehicle-mounted instrument panel to cause a secondary injury, and the secondary injury is often more serious than the primary injury from the front windshield, so that an overall injury to the pedestrian caused by the impact is further increased, thus further increasing a casualty rate.

## SUMMARY

Accordingly, it is necessary to provide a front windshield, a manufacturing method thereof and a vehicle, which can reduce the overall injury to the pedestrian after impacting the front windshield, and have better integrated safety performances.

A first aspect of embodiments of the present application provides a front windshield. The front windshield is mounted on a vehicle including an instrument panel, the front windshield including:

an outer glass layer having a first surface and a second surface which are oppositely arranged;
an inner glass layer having a third surface and a fourth surface which are oppositely arranged; and
a thermoplastic intermediate layer sandwiched between the second surface and the third surface.

The front windshield has a first weakened region. The first weakened region is tested using an adult headform impactor. The adult headform impactor is configured to impact the first weakened region to break the first weakened region and impact the instrument panel after the first weakened region is broken.

The adult headform impactor has a first velocity $V1$ when in contact with the first surface of the first weakened region, the adult headform impactor has a second velocity $V2$ when the fourth surface of the first weakened region is broken, and $V1$ and $V2$ satisfy the following conditions: $V1=11.1\pm0.2$ m/s, and $V1-V2=0.3$ m/s-2.2 m/s.

A second aspect of embodiments of the present application provides a manufacturing method of the above front windshield, including:

step 1: preparing bent outer glass layer and inner glass layer, the outer glass layer having the first surface and the second surface which are opposite, and the inner glass layer having the third surface and the fourth surface which are opposite;
step 2: preparing the thermoplastic intermediate layer, and sequentially laminating the outer glass layer, the thermoplastic intermediate layer and the inner glass layer to form a laminated glass structure; and
step 3: heating, vacuumizing and/or applying a pressure to the laminated glass structure to obtain the front windshield, the front windshield having the first weakened region.

A third aspect of embodiments of the present application provides a vehicle, the vehicle including an instrument panel and the front windshield as described above. The instrument panel is arranged at a position adjacent to a lower side of the front windshield.

The technical solution of the present application has the following remarkable beneficial effects: the front windshield, the manufacturing method thereof and the vehicle according to the present application can reduce a primary injury to the head of the pedestrian from the front windshield when the pedestrian collides with the vehicle and reduce a secondary injury to the head of the pedestrian from the instrument pane, so that a total injury value suffered by the head of the pedestrian is significantly reduced, the total injury to the pedestrian caused by the collision with the front windshield is finally reduced; both collision protection of the pedestrian and safety protection of personnel in the vehicle can be taken into account, and the integrated safety performance of the windshield is improved.

Details of one or more embodiments of the present application are set forth in the accompanying drawings and the detailed description below. Other features, objects, and advantages of the present application will be apparent from the description, the accompanying drawings, and the claims.

## BRIEF DESCRIPTION OF THE DRAWINGS

FIG. 1 is a schematic structural view of a vehicle according to the present application.
FIG. 2 is a schematic sectional structural view of a front windshield according to the present application.
FIG. 3 is an impact curve about an impact time and a resultant acceleration obtained by testing a conventional windshield according to Standard GB24550.
FIG. 4 is a schematic front structural view of a windshield according to an embodiment of the present application.
FIG. 5 is an impact curve about an impact time and a resultant acceleration obtained by testing a front windshield according to the present application according to the Standard GB24550.
FIG. 6 is a schematic front structural view of a windshield according to another embodiment of the present application.
FIG. 7 is a schematic front structural view of a windshield according to still another embodiment of the present application.

## DETAILED DESCRIPTION

To facilitate an understanding of the present application, the present application is described more fully hereinafter with reference to the relevant accompanying drawings. Preferred embodiments of the present application are shown in the drawings. However, the present application may be implemented in many different forms and is not limited to the embodiments set forth herein. It should be understood that these embodiments are provided to make an understanding of the application of the present application more thorough and complete.

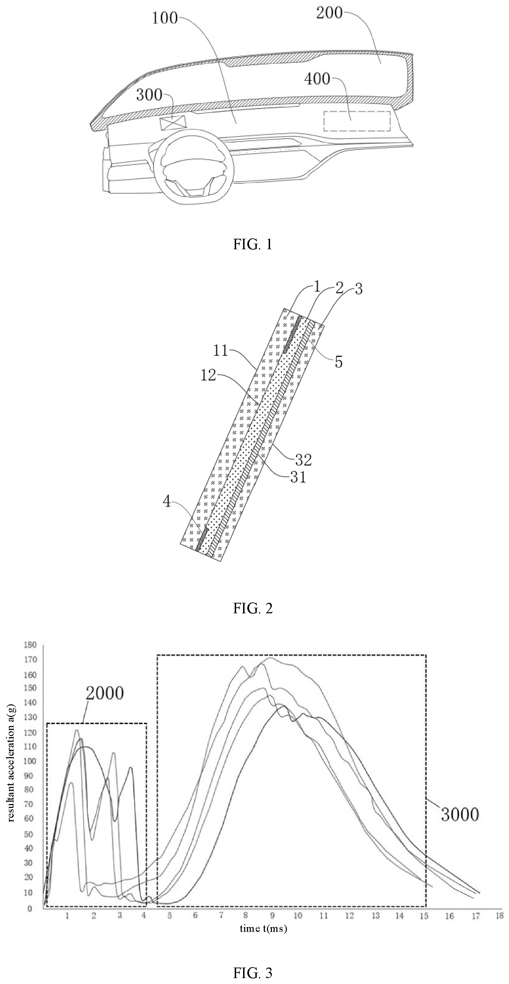

Referring to FIG. 1, the present application provides a vehicle, the vehicle including an instrument panel 100 and a front windshield 200. The instrument panel 100 is arranged at a position adjacent to a lower side of the front windshield 200. The vehicle according to the present application may be, but is not limited to, a car, a truck, a pickup truck, a commercial vehicle, a bus and an off-road vehicle, which is not limited in the present application. The front windshield 200 and the instrument panel 100 are arranged at an included angle, and the included angle is substantially equal to a mounting angle of the front windshield 200. The mounting angle of the front windshield 200 refers to an included angle between the front windshield 200 that is in a mounted state and the horizontal plane, and represents an inclination degree of the front windshield 200, and the mounting angle is usually in a range of 18°-45°, such as 25°, 30°, 35° and 40°.

In some embodiments, a head-up display projector 300 is mounted in the instrument panel 100. The head-up display projector 300 can project information required to be displayed onto the front windshield 200, and light projected by the head-up display projector 300 enters the eyes of a driver through reflection or diffraction by the front windshield 200, so that the driver can view required driving information, road condition information, even entertainment information, or the like, without lowering his head. In some other embodiments, a passenger side airbag 400 is mounted in the instrument panel 100. The passenger side airbag 400 can be ejected from the instrument panel 100 at the moment of a collision accident of the vehicle, thereby protecting a person in the vehicle.

Referring to FIG. 2, the front windshield 200 according to the present application adopts a laminated glass structure, which specifically includes an outer glass layer 1, a thermoplastic intermediate layer 2 and an inner glass layer 3; the outer glass layer 1 has a first surface 11 and a second surface 12 which are opposite. The inner glass layer 3 has a third surface 31 and a fourth surface 32 which are opposite. The thermoplastic intermediate layer 2 is sandwiched between the second surface 12 and the third surface 31.

The outer glass layer 1 is transparent glass or colored glass. A thickness of the outer glass layer 1 is in a range of 0.7 mm - 4 mm, and a visible light transmittance of the outer glass layer 1 is greater than 70%. The inner glass layer 3 is transparent glass or colored glass. A thickness of the inner glass layer 3 is in a range of 0.7 mm-4 mm, and a visible light transmittance of the inner glass layer 3 is greater than 70%. A total iron content (in terms of $Fe_2O_3$) of the transparent glass is less than or equal to 0.1%, even less than or equal to 0.05%, and further, less than or equal to 0.01%, and a visible light transmittance of the transparent glass is in a range of 80%-95%; a total iron content (in terms of $Fe_2O_3$) of the colored glass is in a range of 0.1% to 0.8%, and even in a range of 0.1% to 0.5%, and a visible light transmittance of the colored glass is in a range of 75%-90%. For example, the outer glass layer 1 may be transparent glass having a thickness of 2.1 mm and a visible light transmittance of 89%, and the inner glass layer 3 may be green glass having a thickness of 1.6 mm and a visible light transmittance of 83%, or green glass having a thickness of 2.1 mm and a visible light transmittance of 80%.

The thermoplastic intermediate layer 2 is a transparent thermoplastic polymer film or a colored thermoplastic polymer film, and a thickness of the thermoplastic intermediate layer 2 is in a range of 0.38 mm-2.28 mm. For example, the thickness of the thermoplastic intermediate layer 2 may be, but is not limited to, 0.38 mm, or 0.76 mm, or 1.14 mm, or 1.52 mm, or 1.9 mm, or 2.28 mm, or other values between 0.38mm and 2.28mm. The thermoplastic polymer film may be made of at least one selected from a group consisting of polyvinyl butyral (PVB), polyurethane (PU), ethylene vinyl acetate (EVA), and an ionic polymer (SGP). When the thermoplastic intermediate layer 2 is made of a transparent thermoplastic polymer, the transparent thermoplastic polymer has a visible light transmittance greater than or equal to 80%. For example, the visible light transmittance of the thermoplastic intermediate layer 2 may be, but is not limited to, 80%, or 85%, or 90%, or 95%, or the like. When the thermoplastic intermediate layer 2 is a colored thermoplastic polymer film, the colored thermoplastic polymer film has a visible light transmittance greater than 70%. For example, the visible light transmittance of the thermoplastic intermediate layer 2 may be, but is not limited to, 75%, or 80%, or 85%, or 90%, or the like. The colored thermoplastic polymer film may be a gray thermoplastic polymer film, a green thermoplastic polymer film, or a blue thermoplastic polymer film.

The outer glass layer 1, the thermoplastic intermediate layer 2 and the inner glass layer 3 are processed by an automobile glass production process to form the front windshield 200 with a laminated glass structure. The front windshield 200 can meet use requirements of China Standard GB9656 and use requirements of automobile glass standards of Europe, America and other countries. When the front windshield 200 is mounted on the vehicle, the outer glass layer 1 is located on an outer side of the vehicle, and the first surface 11 is an outer surface of the front windshield 200 exposed outside the vehicle; the inner glass layer 3 is located on an inner side of the vehicle, and the fourth surface 32 is an inner surface of the front windshield 200 exposed in the vehicle. When a pedestrian collides with the front windshield 200, the head of the pedestrian firstly contacts the first surface 11 of the outer glass layer 1, and if the front windshield 200 is not broken, the head of the pedestrian is greatly impacted by the front windshield 200; if the front windshield 200 is broken, the head of the pedestrian can partially or even completely penetrate through the fourth surface 32 of the inner glass layer 3.

For safety use requirements of the front windshield 200, the front windshield not only meets the conventional basic requirement of protecting the person in the vehicle, but also can prevent the person in the vehicle from penetrating out of the vehicle from the interior of the vehicle during the collision and cannot be easily broken during a collision with flying objects such as flying stones outside the vehicle to realize impact resistance to the flying objects such as the flying stones outside the vehicle. A conventional windshield needs to meet these safety use requirements, but the front windshield is also required to protect the pedestrian colliding with the vehicle in more and more countries, so as to reduce an injury to the head of the pedestrian from the windshield during the collision as much as possible. A degree of the injury to the head of the pedestrian from the windshield during the collision is evaluated using a head injury criterion (Head Injury Criteria, HIC) according to provisions of China Standard GB24550, and the HIC is calculated according to the following expression:

$$HIC = (t_2 - t_1) \left[ \frac{1}{t_2 - t_1} \int_{t_1}^{t_2} a\,dt \right]^{2.5}$$

where $a$ represents a measured resultant acceleration, in g ($1g=9.81 m/s^2$);
$t_1$ and $t_2$ are two moments (in seconds) during an impact process and indicate a certain time interval between the start of recording and the end of recording during which the HIC has a maximum value ($t_2-t_1 \leq 15$ ms).

According to research of the applicant, after the head of the pedestrian collides with the front windshield 200, if the front windshield 200 is not broken, the HIC of the front windshield 200 is inevitably greater than 1,000, and even greater than 1,700, and the head of the pedestrian is subjected to a great impact from the front windshield 200, so that the head of the pedestrian is subjected to a serious primary injury; if the front windshield 200 is broken, the HIC of the front windshield 200 may be greater than 1,000 or less than 1,000. In order to better protect the head of the pedestrian, the HIC of the front windshield 200 according to the present application is less than 1,000, so as to reduce the primary injury to the head of the pedestrian as much as possible.

According to further research of the applicant, the applicant surprisingly found that if the HIC of the front windshield 200 is less than 1,000, the front windshield 200 is broken after the head of the pedestrian collides with the front windshield 200, the head of the pedestrian may partially or even completely penetrate through the fourth surface 32 of the inner glass layer 3. Due to a structural design of the vehicle and an angle of the collision between the pedestrian and the vehicle, the head of the pedestrian usually directly impacts a lower half region of the front windshield 200, and even a region adjacent to a bottom edge of the front windshield 200, the head of the pedestrian further impacts the instrument panel 100 below the front windshield 200 after penetrating out of or penetrating through the fourth surface 32, the instrument panel 100 causes a secondary injury to the head of the pedestrian, and particularly when the head-up display projector 300, the passenger side airbag 400 or other hard and sharp decorative components are mounted in the instrument panel 100, such that the secondary injury to the head of the pedestrian caused by the instrument panel 100 may be more serious than the primary injury to the head of the pedestrian caused by the front windshield 200.

Referring to FIG. 3, a plurality of conventional windshields were provided and tested using an adult headform impactor according to the Standard GB24550, so as to simulate the process that the head of the pedestrian impacts the front windshield 200 after the pedestrian collides with the vehicle, and an impact curve about an impact time and the resultant acceleration was obtained by an acceleration sensor and a data acquisition instrument. FIG. 3 shows five impact curves in which the abscissa is the impact time $t$ (Time) in milliseconds ($ms$) and the ordinate is the resultant acceleration $a$ (acceleration) in $g$. In the present application, the adult headform impactor is subjected to a resistance to perform deceleration movement after sequentially impacting the windshield and the instrument panel 100, and the resultant acceleration $a$ is an absolute value for convenience of depiction and explanation.

In FIG. 3, the dashed box 2000 represents the impact curve about the impact time and the resultant acceleration from the moment the adult headform impactor contacting with the first surface of the front windshield 200 to the occurrence of breakage of the front windshield 200 after the adult headform impactor impacts the front windshield 200, and the impact is typically completed within 5 ms; the dashed box 3000 represents the impact curve about the impact time and the resultant acceleration within 15 ms from the occurrence of the breakage of the front windshield 200 to the occurrence of the impact on the instrument panel 100. Two HICs can be calculated respectively according to the curves in the dashed box 2000 and the dashed box 3000 as well as the HIC calculation formula. For the five impact curves of the conventional windshield shown in FIG. 3, the resultant acceleration in the dashed box 3000 is significantly greater than the resultant acceleration in the dashed box 2000, the HIC calculated according to the curve in the dashed box 3000 is also significantly greater than the HIC calculated according to the curve in the dashed box 2000, and even the HIC calculated according to the curve in the dashed box 3000 is greater than 1,000. That is, the instrument panel 100 causes a more serious secondary injury to the head of the pedestrian, and even the standard requirement that the HIC is less than 1,000 cannot be met.

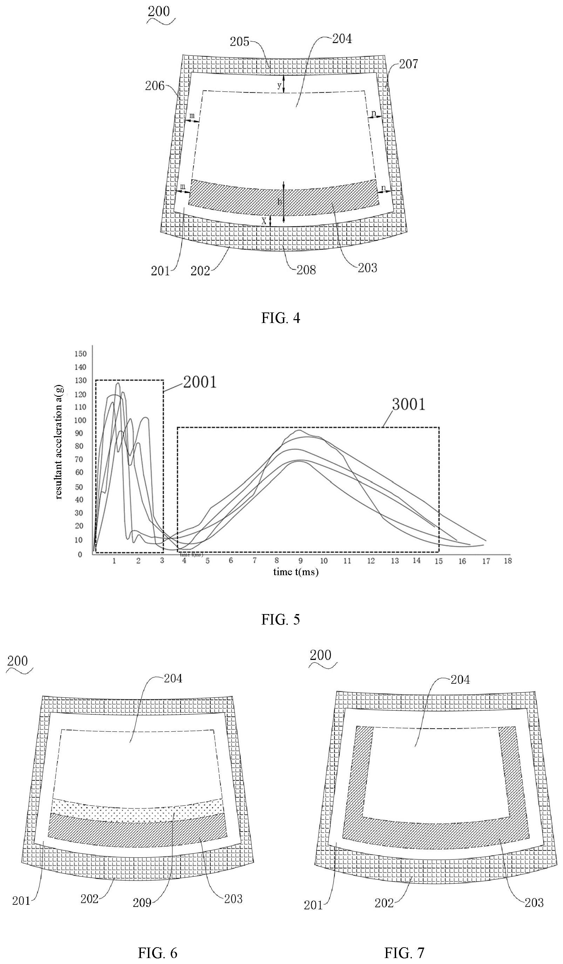

Based on this, in the present application, the front windshield 200 with the HIC less than 1,000 is further optimized. Referring to FIG. 4, a first weakened region 203 is arranged at a region of the front windshield 200 corresponding to the instrument panel 100. The first weakened region 203 is tested by using the adult headform impactor. The adult headform impactor impacts the first weakened region 203 to break the first weakened region 203, and the adult headform impactor impacts the instrument panel 100 after the first weakened region 203 is broken; the adult headform impactor has a first velocity $V1$ when in contact with the first surface 11 of the first weakened region 203, the adult headform impactor has a second velocity $V2$ when the fourth surface 32 of the first weakened region 203 is broken. $V1$ and $V2$ satisfy the following conditions: $V1$=11.1±0.2m/s, and $V1$-$V2$=0.3 m/s -2.2 m/s. From the above HIC expression, the magnitude of HIC is directly related to the resultant acceleration $a$ and the time interval $t_2$-$t_1$ during the impact. The larger the velocity difference, $V1$-$V2$, is, the larger the deceleration resistance generated by the front windshield 200 to the adult headform impactor is, i.e., the larger the resultant acceleration $a$ is; or the less likely the front windshield 200 is to be broken, i.e., the longer the collision time between the adult headform impactor and the front windshield 200. Then, the HIC of the front windshield 200 is greater than 1,000, and even greater than 2,000, and the front windshield 200 may cause a quite serious primary injury to the head of the pedestrian. On the other hand, the smaller the velocity difference, $V1$-$V2$, is, the more likely the front windshield 200 is to be broken, i.e., the more easily the adult headform impactor penetrates through the front windshield 200, and even the adult headform impactor can penetrate through the front windshield 200 at the moment of the collision and impacts the instrument panel 100 at an extremely high velocity, so that the HIC of the instrument panel 100 is greater than 1,000, and even greater than 2,000, and the instrument panel 100 causes a quite serious secondary injury to the head of the pedestrian. In the present application, the first weakened region 203 is arranged on the front windshield 200, and the velocity difference, $V1$-$V2$, is controlled to be kept within a range of 0.3 m/s-2.2 m/s on the premise that the velocity $V1$ remains essentially constant, and specifically may be, for example, 0.3 m/s, 0.4 m/s, 0.5 m/s, 0.6 m/s, 0.7 m/s, 0.8 m/s, 0.9 m/s, 1.0 m/s, 1.1 m/s, 1.2 m/s, 1.3 m/s, 1.4 m/s, 1.5 m/s, 1.6 m/s, 1.7 m/s, 1.8 m/s, 1.9 m/s, 2.0 m/s, 2.1 m/s, 2.2 m/s, or the like, so that on the basis of meeting the basic requirement of protecting the person in the vehicle, the HIC value of the front windshield 200 and the HIC value of the instrument panel 100 can be effectively controlled, and therefore, the primary injury to the head of the pedestrian from the front windshield 200 is reduced, and the secondary injury to the head of the pedestrian from the instrument panel 100 is reduced, thus significantly reducing the total injury value suffered by the head of the pedestrian. It can be understood that the first weakened region 203 can be tested using the adult headform impactor according to the China standard GB24550, or EU Regulation ECE UN R127, European New Car Assessment Program (E-NCAP) Protocol, China New Car Assessment Program (C-NCAP), China Insurance Automobile Safety Index (C-IASI), or the like. In the present application, the test is preferably performed according to the China Standard GB24550, and the adult headform impactor is an adult headform impactor specified in the China Standard GB24550.

Referring to FIG. 5, a plurality of front windshields 200 that is further optimized according to the present application were provided and tested using the adult headform impactor according to the Standard GB24550, so as to simulate the process that the head of the pedestrian impacts the front windshield 200 after the pedestrian collides with the vehicle, and the impact curve about the impact time and the resultant acceleration was obtained by the acceleration sensor and the data acquisition instrument. The dashed box 2001 represents the impact curve about the impact time and the resultant acceleration from the moment the adult headform impactor contacting with the first surface of the windshield 200 to the occurrence of breakage of the windshield 200 after the adult headform impactor impacts the windshield 200; the dashed box 3001 represents the impact curve about the impact time and the resultant acceleration within 15 ms from the occurrence of the breakage of the windshield 200 to the occurrence of the impact on the instrument panel 100. The adult headform impactor has a first maximum resultant acceleration $a5$ within 0-5 ms period after impacting the first weakened region, and $a5$ is less than or equal to 180 g. The adult headform impactor has a second maximum resultant acceleration $a15$ within 5-15 ms period after impacting the first weakened region 203, and typically, $a5$ is greater than $a15$. This is more favorable to reducing the secondary injury to the head of the pedestrian from the instrument panel 100, the standard requirement that the HIC is less than 1,000 is met, and the total injury value suffered by the head of the pedestrian is significantly reduced. The front windshield 200 can take into account both collision protection of the pedestrian and safety protection of the person in the vehicle, and has a better integrated safety performance.

In some embodiments, $V1-V2$=0.6 m/s-2.0m/s. The velocity $V1$ is essentially constant according to regulations of the test standards such as the China Standard GB24550, and by controlling the velocity difference, $V1-V2$, to be kept within the range of 0.6 m/s-2.0 m/s, the resultant acceleration $a$ during the impact and the breakage time of the front windshield 200 can be within a more reasonable range, thereby controlling the HIC value more effectively. In this way, the primary injury to the head of the pedestrian from the front windshield 200 is reduced, the secondary injury to the head of the pedestrian from the instrument panel 100 is reduced, the total injury value suffered by the head of the pedestrian is significantly reduced, and the standard requirement that the HIC is less than 1,000 is met.

In some embodiments, the breakage time of the front windshield 200 after the adult headform impactor impacts the front windshield 200 is shortened to within 3 ms, that is, the time required for the adult headform impactor to impact the first weakened region 203 to break the first weakened region 203 is less than or equal to 3 ms, which is more favorable to reducing the primary injury to the head of the pedestrian from the front windshield 200. During the breakage of the front windshield 200, the outer glass layer 1 has an outer maximum resultant acceleration $aO$ for the adult headform impactor, and the inner glass layer 3 has an inner maximum resultant acceleration $a1$ for the adult headform impactor. That is, the adult headform impactor has two peaks within 0-5 ms period after impacting the first weakened region 203, in particular, corresponding to the two peaks in the dashed box 2001. Generally, the inner glass layer 3 is broken earlier than the outer glass layer 1, and the outer maximum resultant acceleration $aO$ is greater than the inner maximum resultant acceleration $a1$. In some other embodiments, the outer maximum resultant acceleration $aO$ is less than the inner maximum resultant acceleration $a1$. In still other embodiments, the adult headform impactor has only one peak within 0-5 ms period after impacting the first weakened region 203.

In some embodiments, the first maximum resultant acceleration $a5$ should be generally less than or equal to 180 g, and the second maximum resultant acceleration $a15$ should be generally less than or equal to 100 g, which is more beneficial to reducing the primary injury to the head of the pedestrian from the front windshield 200 and the secondary injury to the head of the pedestrian from the instrument panel 100. Preferably, the first maximum resultant acceleration $a5$ is less than or equal to 150 g and the second maximum resultant acceleration $a15$ is less than or equal to 80 g.

In some embodiments, the adult headform impactor has a first head injury criterion HIC1 within 0-5 ms period after impacting the first weakened region 203 and a second head injury criterion HIC2 within 5 ms-15 ms period after impacting the first weakened region 203, $100 \leq HIC1 \leq 650$, and HIC2<1,000. In the present application, the first weakened region 203 is arranged on the front windshield 200, and the velocity difference, $V1-V2$, is controlled to be kept within a certain range so that the HIC value is controlled to meet the following conditions: $100 \leq HIC1 \leq 650$, and HIC2<1,000. On the basis of meeting the basic requirement of protecting the person in the vehicle, the primary injury to the head of the pedestrian from the front windshield 200 can be reduced, the secondary injury to the head of the pedestrian from the instrument panel 100 can also be reduced, and the standard requirement that the HIC is less than 1,000 can be met.

In some embodiments, the second head injury criterion HIC2 is less than or equal to 650, and HIC2 is less than HIC1, which is more beneficial to reducing the secondary injury to the head of the pedestrian from the instrument panel 100. According to the research of the applicant, it is found that if HIC1 is too low, the adult headform impactor may directly penetrate through the front windshield 200, and although the front windshield 200 causes a smaller primary injury to the head of the pedestrian, the instrument panel 100 causes a quite large secondary injury to the head of the pedestrian, resulting in that HIC2 is obviously greater than 1,000, and that the requirement of impact resistance to the flying objects such as the flying stones outside the vehicle is difficult to meet. Therefore, after the adult headform impactor impacts the first weakened region 203, the preferred state of the first weakened region 203 is that the first weakened region 203 is broken but the adult headform impactor does not completely penetrate through the first weakened region 203. The first head injury criterion HIC1 may be, for example, 100, 150, 180, 200, 220, 250, 280, 300, 320, 350, 370, 400, 430, 450, 480, 500, 550, 600 and 650. The first head injury criterion HIC1 may be, for example, 100, 150, 180, 200, 220, 250, 280, 300, 320, 350, 370, 400, 430, 450, 480, 500, 550, 600 and 650; preferably, 200≤HIC1≤500, and HIC2≤500.

In some embodiments, in order to further reduce the primary injury to the head of the pedestrian from the front windshield 200, the front windshield 200 further has a second weakened region 204. The second weakened region 204 is also located within a transparent region 201. The second weakened region 204 is tested using the adult headform impactor. The adult headform impactor has a third head injury criterion HIC3 within 0-15 ms period after impacting the second weakened region 204, and HIC3<1,000. Preferably, 100≤HIC3≤900, and specifically, HIC3 may be, for example, 100, 150, 200, 250, 300, 350, 400, 450, 500, 550, 600, 650, 700, 750, 800, 850, 900, or the like. In the present application, the first weakened region 203 is mainly configured to protect the head of the pedestrian, and can reduce the primary injury to the head of the pedestrian from the front windshield 200 and reduce the secondary injury to the head of the pedestrian from the instrument panel 100; the second weakened region 204 is mainly configured to protect the person in the vehicle, also protects the head of the pedestrian and can reduce the primary injury to the head of the pedestrian from the front windshield 200; preferably, HIC1 and HIC3 satisfy that HIC3 is greater than HIC1, and 200≤HIC3≤800.

In some embodiments, the front windshield 200 has the transparent region 201 and a shielding region 202 surrounding the transparent region 201. The transparent region 201 is located in a central region of the front windshield 200 and has a high visible light transmittance meeting a safety standard. The visible light transmittance of the transparent region 201 is greater than or equal to 70%.

The shielding region 202 is arranged around a peripheral region of the front windshield 200. A visible light transmittance of the shielding region 202 is relatively low, the visible light transmittance of the shielding region 202 is less than or equal to 10%, so that the shielding region is configured to shield and protect components and parts in the vehicle and avoid that the components and parts in the vehicle are aged to be damaged due to direct irradiation of sunlight, so as to prolong service lives of the components and parts in the vehicle. Meanwhile, the shielding region 202 can further shield the components and parts in the vehicle to ensure overall attractiveness in external observation. Preferably, the visible light transmittance of the shielding region 202 is less than or equal to 5%, more preferably less than or equal to 1%, further preferably less than or equal to 0.5%, and even the visible light transmittance of the shielding region 202 is substantially equal to 0, that is, the shielding region 202 is opaque.

The shielding region 202 may be formed of at least one of a dark printed layer, a dark polymer film, and a dimming element.

The dark printed layer 4 may be made of ceramic ink or ultraviolet ink, the ceramic ink or the ultraviolet ink is printed on the second surface 12 through a process such as screen printing or ink jet printing, and is cured, or sintered at a high temperature, to form the dark printed layer 4. A color of the dark printed layer is preferably black, brown, tan, or the like. The dark printed layer 4 is arranged around the peripheral region of the second surface 12. It can be understood that the dark printed layer 4 may also be located on the third surface 31 only, or on the fourth surface 32 only, or on both the second surface 12 and the fourth surface 32, or on both the second surface 12 and the third surface 31, or on both the third surface 31 and the fourth surface 32, or on the second surface 12, the third surface 31 and the fourth surface 32 at the same time.

The dark polymer film may be a body-colored polymer film, and the polymer film is made of thermoplastic resin such as polyvinyl butyral (PVB), polyethylene terephthalate (PET), polyvinyl chloride (PVC), ethylene vinyl acetate (EVA), thermoplastic polyurethane elastomer (TPU), polyolefin elastomer (POE), polyurethane (PU), an ionic polymer film (SGP), or the like, preferably PET or PVB. For example, a coloring component is added in a polymer film manufacturing process to realize body coloring, so as to obtain the black polymer film, the brown polymer film, or the like; the dark polymer film may also be a polymer film with a pigment printed on a surface, for example, a black or brown pigment or paint is printed on the surface of the polymer film.

The dimming element may be a polymer dispersed liquid crystal (PDLC) film, a suspended particle device (SPD), an electrochromic (EC) film, a dye liquid crystal (LC) film, or the like. A lowest visible light transmittance of the dimming element is less than or equal to 5%, for example, 3%, 2%, 1%, 0.5%, and 0%. A highest visible light transmittance of the dimming element can be set as required, for example, can be set as 10%, 20%, 30%, 50%, 70%, 80%, or the like. Specifically, for example, the visible light transmittance of the dimming element can be adjusted between 0% and 20%, or between 0.5% and 50%, or between 0% and 70%, or the like, so as to meet requirements of the visible light transmittance under multiple scenarios.

In some embodiments, the first weakened region 203 and the second weakened region 204 are both located within the transparent region.

Referring to FIG. 4, the first weakened region 203 is located in the transparent region 201. The adult headform impactor continues to impact the instrument panel 100 after the first weakened region 203 is broken, and therefore, the first weakened region 203 is also referred to as an instrument panel weakened region or IP weakened region.

The shielding region 202 includes a top shielding region 205 located, a left shielding region 206, a right shielding region 207, and a bottom shielding region 208. The top shielding region 205 is located in a top region of the front windshield 200. The left shielding region 206 is located in a left region of the front windshield 200. The right shielding region 207 is located in a right region of the front windshield 200. The bottom shielding region 208 is located in a bottom region of the front windshield 200.

Specifically, a distance between a lower boundary of the first weakened region 203 and the bottom shielding region 208 is denoted by $x$, a distance between a left boundary of the first weakened region 203 and the left shielding region 206 is denoted by $m$, a distance between a right boundary of the first weakened region 203 and the right shielding region 207 is denoted by $n$, a distance between an upper boundary and the lower boundary of the first weakened region 203 is denoted by $h$, and $x$ is less than or equal to 15 mm, $m$ is less than or equal to 50 mm, $n$ is less than or equal to 50 mm, and $h$ is equal to 100 mm -300mm. Specifically, $x$ may be, for example, 15 mm, 10 mm, 5 mm, 1 mm, or the like; $m$ may be, for example, 50 mm, 45 mm, 40 mm, 35 mm, 30 mm, 25 mm, 20 mm, 15 mm, 10 mm, 5 mm, or the like; $n$ may be, for example, 50 mm, 45 mm, 40 mm, 35 mm, 30 mm, 25 mm, 20 mm, 15 mm, 10 mm, 5 mm, or the like; and $h$ may be, for example, 100 mm, 120 mm, 150 mm, 180 mm, 200 mm, 230 mm, 250 mm, 280 mm, 300 mm, or the like.

Referring to FIG. 4, the second weakened region 204 is located within the transparent region 201, and specifically, the second weakened region 204 is located between the first weakened region 203 and the top shielding region 205. A distance between an upper boundary of the second weakened region 204 and the top shielding region 205 is denoted by $y$, a distance between a left boundary of the second weakened region 204 and the left shielding region 206 is equal to $m$, a distance between a right boundary of the second weakened region 204 and the right shielding region 207 is equal to $n$, $y$ is less than or equal to 100mm, and $y$ may be, for example, 5 mm, 10 mm, 20 mm, 30 mm, 40 mm, 50 mm, 60 mm, 70 mm, 80 mm, 90 mm, 100 mm, or the like.

In some embodiments, a ratio of an area of the first weakened region 203 to an area of the transparent region 201 is less than or equal to 1/3, a ratio of an area of the second weakened region 204 to the area of the transparent region 201 is less than or equal to 2/3, and the area of the first weakened region 203 is less than the area of the second weakened region 204.

Referring to FIG. 4 and FIG. 7, the first weakened region 203 adjoins the second weakened region 204.

In order to enable the front windshield 200 having the first weakened region 203 and the second weakened region 204, in the present application, the control of different HIC regions is realized by performing regional weakening on the windshield. For the first weakened region 203, a peak value of the second maximum resultant acceleration $a15$ can be further advanced, and the peak value of the second maximum resultant acceleration $a15$ can be reduced such that $a15$ is less than $a5$, which significantly optimizes the impact curve as a whole.

In some other embodiments, referring to FIG. 6, a transition weakened region 209 may be arranged between a lower boundary of the second weakened region 204 and the upper boundary of the first weakened region 203. An area of the transition weakened region 209 is less than the area of the first weakened region 203. The transition weakened region is tested by using the adult headform impactor. The adult headform impactor has a fourth head injury criterion HIC4 within 0-15 ms period after impacting the transition weakened region, HIC4 is greater than HIC1, and HIC4 is less than HIC3.

In some embodiments, when the front windshield 200 is weakened, other safety requirements are also required to be ensured. For example, the passenger side airbag 400 will directly impact the inner glass layer 3 upon being deployed. In order to protect the person in the vehicle, strength of the inner glass layer 3 is preferably greater than strength of the outer glass layer 1, bending strength of the third surface 31 is greater than bending strength of the second surface 12, and/or bending strength of the fourth surface 32 is greater than the bending strength of the second surface 12.

The thickness of the thermoplastic intermediate layer 2 of the conventional front windshield 200 is in a range of 0.76 mm to 1.52 mm. In some embodiments of the present application, the thickness of the thermoplastic intermediate layer 2 in the first weakened region 203 is in a range of 0.38 mm-0.6 mm, and specifically may be, for example, 0.38 mm, 0.5 mm, 0.6 mm, or the like, thereby better implementing the first weakened region 203. Furthermore, in order to ensure overall strength of the second weakened region 204, the thickness of the thermoplastic intermediate layer 2 in the second weakened region 204 is preferably at least 0.76 mm.

According to the research of the applicant, a water content of the thermoplastic intermediate layer 2 can influences strength of bonding of the thermoplastic intermediate layer 2 to the outer glass layer 1 and the inner glass layer 3. The water content of the thermoplastic intermediate layer 2 of the conventional front windshield 200 is in a range of 0.45% to 0.55%, which can bring better bonding strength, resulting in a higher HIC of the front windshield 200. In some embodiments of the present application, in order to implement the first weakened region 203 and the second weakened region 204, the water content of the thermoplastic intermediate layer 2 in the present application is in a range of 0.3%-0.4%, and specifically may be, for example, 0.3%, 0.32%, 0.35%, 0.38%, 0.4%, or the like; or in a range of 0.6%-0.7%, and specifically may be, for example, 0.6%, 0.61%, 0.63%, 0.65%, 0.68%, 0.7%, or the like, thereby effectively controlling the HIC value.

One of the second surface 12 and the third surface 31 of the conventional front windshield 200 is an air surface, and the other is a tin surface, which improves the strength of bonding between the second and third surfaces 12, 13 and the thermoplastic intermediate layer 2. In some embodiments of the present application, the outer glass layer 1 and the inner glass layer 3 are both float glass. The float glass is provided with the air surface and the tin surface in a production process. A concentration of tin oxide of the tin surface is greater than that of tin oxide of the air surface.

Specifically, both the second surface 12 and the third surface 31 are tin surfaces or air surfaces. Both the second surface 12 and the third surface 31 are tin surfaces, that is, the concentration of the tin oxide of the second surface 12 is greater than that of the tin oxide of the first surface 11, and the concentration of the tin oxide of the third surface 31 is greater than that of the tin oxide of the fourth surface 32. Optionally, both the second surface 12 and the third surface 31 are air surfaces, that is, the concentration of the tin oxide of the second surface 12 is less than that of the tin oxide of the first surface 11, and the concentration of the tin oxide of the third surface 31 is less than that of the tin oxide of the fourth surface 32.

In the conventional front windshield 200, the thickness of the outer glass layer 1 is 2.1 mm, and the thickness of the inner glass layer 3 is 2.1 mm, or the thickness of the outer glass layer 1 is 3.0 mm, and the thickness of the inner glass layer 3 is 1.1 mm, and the time required for the conventional front windshield 200 to break after being impacted is about 5 ms, and even about 6.5 ms. In the present application, a ratio of the thickness of the outer glass layer 1 to the thickness of the inner glass layer 3 is preferably greater than or equal to 0.75 and less than 1, for example, is 0.75, 0.8, 0.85, 0.9, 0.95, 0.96, 0.97, 0.98, 0.99, or the like, so that the inner glass layer 3 and the outer glass layer 1 can be rapidly broken at the same time or nearly the same time, and then, the time required for the front windshield 200 to break after being impacted can be shortened to within 3 ms. Specifically, for example, the thickness of the outer glass layer 1 is 1.6 mm and the thickness of the inner glass layer 3 is 2.1 mm, or the thickness of the outer glass layer 1 is 1.8 mm, and the thickness of the inner glass layer 3 is 2 mm, etc.

As shown in FIG. 2, in the present application, a weakening coating 5 is further arranged on at least one of the second surface 12, the third surface 31 and the fourth surface 32. The weakening coating 5 at least covers the first weakened region 203. Preferably, the weakening coating 5 at least covers the first weakened region 203 and the second weakened region 204. Further, the weakening coating 5 at least covers the transparent region 201. The weakening coating 5, during the manufacturing process of the front windshield 200, can be subjected to a heating and softening step, a bending and shaping step and an annealing step together with the outer glass layer 1 or the inner glass layer 3. Because the weakening coating 5 is heated and annealed at different rates than the outer glass layer 1 or the inner glass layer 3, so the surface of the glass on which the weakening coating 5 is located generates mechanical stress on the interior of the glass, so that tensile stress inside the glass is increased, and compressive stress on the surface of the glass on which the weakening coating 5 is located is increased. This, in turn, reduces stress on the surface of the glass without the weakening coating 5, and achieving the following effects: $100 \leq HIC1 \leq 650$, and $HIC2 < 1,000$. The weakening coating 5 may be arranged on at least one of the second surface 12, the third surface 31 and the fourth surface 32 by physical vapor deposition (PVD) or a sol-gel method. The PVD is preferably a magnetron sputtering process. It can be appreciated that the weakening coating 5 not only serves to weaken the windshield 200, but also can give the windshield 200 its own functions such as heat insulation, ultraviolet protection, electrical heating for defrosting and defogging, an increase in the reflectivity of a P-polarized light to enable a head-up display (HUD), a reduction in the reflectivity of a visible light, fogging prevention, water repellency, and anti-glare, etc.

In some embodiments, the weakening coating 5 includes at least one infrared reflection functional layer. The infrared reflection functional layer may be a metal layer, a metal alloy layer or a transparent conductive oxide layer (TCO layer). One, two, three, four, even five, etc., infrared reflection functional layers in the weakening coating 5 may be provided. In consideration of design complexity, production difficulty, a manufacturing cost, or the like, 2 to 4 infrared reflection functional layers is preferably provided. It can be appreciated that the weakening coating 5 further includes at least two medium layers. Each infrared reflection functional layer is located between two adjacent medium layers. The medium layer, on the one hand, functions as protecting the infrared reflection functional layer and preventing the infrared reflection functional layer from being oxidized or corroded, and on the other hand, can modulate an optical property, a mechanical performance, reflective color, or the like, of the weakening coating 5.

The metal layer may be made of gold (Au), silver (Ag), copper (Cu) or aluminum (Al), and the metal alloy layer may be made of a silver alloy with a silver content greater than or equal to 90%, such as a silver-copper alloy, a silver-indium alloy or a silver-aluminum alloy. A thickness of the metal layer or the metal alloy layer is in a range of 5 mm-20 nm. When the infrared reflection functional layer is a metal layer or a metal alloy layer, the weakening coating 5 is arranged on the second surface 12 or the third surface 31.

The infrared reflection functional layer may also be a transparent conductive oxide layer. The transparent conductive oxide layer may be made of at least one selected from the group consisting of ITO (indium tin oxide), NiCrOx, FTO (fluorine-doped tin oxide), ZnSnOx and doped zinc oxide. A doped element in the doped zinc oxide may be at least one selected from the group consisting of aluminum, tungsten, hafnium, gallium, yttrium, niobium and neodymium. The doped zinc oxide may be, for example, AZO (aluminum-doped zinc oxide) and HAZO (hafnium-and-aluminum-doped AZO). In some embodiments, the transparent conductive oxide layer has a thickness in a range of 50 nm-300 nm. When the infrared reflection functional layer is a transparent conductive oxide layer, the weakening coating 5 is arranged on the second surface 12, the third surface 31 or the fourth surface 32.

In some other embodiments, the weakening coating 5 includes at least one stacked structure of a "high refractive index layer/low refractive index layer". The high refractive index layer has a refractive index not less than 1.8, and the low refractive index layer has a refractive index not greater than 1.7; the weakening coating 5 is configured to reduce the visible light reflectivity of the front windshield 200 or increase the P-polarized light reflectivity of the front windshield 200. Specifically, the weakening coating 5 may include 1 to 4 stacked structures. For example, the weakening coating 5 includes one stacked structure of the high refractive index layer/low refractive index layer, with the high refractive index layer directly arranged on the second surface 12, the third surface 31 or the fourth surface 32, and with the low refractive index layer arranged on the high refractive index layer; the weakening coating 5 includes two stacked structures of the high refractive index layer/low refractive index layer, that is, a first high refractive index layer, a first low refractive index layer, a second high refractive index layer and a second low refractive index layer are sequentially arranged outwards, with the first high refractive index layer directly arranged on the second surface 12, the third surface 31 or the fourth surface 32; the weakening coating 5 includes three stacked structures of the high refractive index layer/low refractive index layer; that is, a first high refractive index layer, a first low refractive index layer, a second high refractive index layer, a second low refractive index layer, a third high refractive index layer and a third low refractive index layer are sequentially arranged outwards, with the first high refractive index layer directly arranged on the second surface 12, the third surface 31 or the fourth surface 32.

The present application further provides a manufacturing method of the front windshield 200, including the following steps:

step 1: preparing the bent outer glass layer 1 and inner glass layer 3, the outer glass layer 1 having the first surface 11 and the second surface 12 which are opposite, and the inner glass layer 3 having the third surface 31 and the fourth surface 32 which are opposite;

step 2: preparing the thermoplastic intermediate layer 2, and sequentially laminating the outer glass layer 1, the thermoplastic intermediate layer 2 and the inner glass layer 3 to form a laminated glass structure; and

step 3: heating, vacuumizing and/or applying a pressure to the laminated glass structure to obtain the front windshield 200, the front windshield 200 having the first weakened region 203.

In some embodiments, the front windshield 200 has at least one weakened structure. The weakened structure is formed by using at least one of weakening methods as follows.

(1) Internal defects are introduced between the first surface and the second surface by using a laser weakening method.

(2) Internal defects are introduced between the third surface and the fourth surface by using a laser weakening method.

(3) Microcracks are formed on the second surface by adopting a physical friction weakening method.

(4) Fracture patterns are formed on the second surface by adopting a chemical etching weakening method.

The weakened structure may be located within the first weakened region 203. Furthermore, when the front windshield 200 has the second weakened region 204, the weakened structure may be located within the second weakened region 204.

It should be noted that, in the present application, the weakened structure may be located only in the first weakened region 203, or a plurality of weakened structures are located in the first weakened region 203 and the second weakened region 204 respectively. The weakened structure in the first weakened region 203 may be the same as or different from the weakened structure in the second weakened region 204, specifically based on the design.

In some embodiments, the bent outer glass layer 1 and inner glass layer 3 are obtained by subjecting flat glass to the heating and softening step, the bending and shaping step and the annealing step; process conditions set in the heating and softening step, the bending and shaping step and the annealing step are different, and stress on the outer glass layer 1 and the inner glass layer 3 can be further adjusted to further adjust the HIC of the front windshield 200. In the heating and softening step, a temperature of the flat glass is increased to a softening temperature by using a heating element; in the bending and shaping step, the flat glass is bent and shaped by adopting a bending die, and the bending die can include at least one of a solid male die, a solid female die, an annular male die and an annular female die; in the annealing step, temperatures of the bent outer glass layer 1 and inner glass layer 3 are reduced to a room temperature using an air blowing device.

In the present application, the heating and softening step, the bending and shaping step, and the annealing step preferably satisfy at least one of the conditions as follows.

(1) A heating temperature in the heating and softening step is in a range of 660°C to 750°C.

(2) In the heating and softening step, a convection heating method is adopted to soften the flat glass.

(3) In the heating and softening step, a convection heating method and a radiation heating method are adopted to soften the flat glass.

(4) In the heating softening step, a surface of the flat glass having a lower concentration of tin oxide faces the heating element.

(5) In the heating softening step, a heating and softening time of the outer glass layer 1 is greater than that of the inner glass layer 3.

(6) In the bending and shaping step, a temperature of the bending die for bending the flat glass is higher than or equal to 500°C.

(7) In the annealing step, a blowing air pressure on the outer glass layer 1 is less than that on the inner glass layer 3.

(8) In the annealing step, an annealing time of the outer glass layer 1 is longer than that of the inner glass layer 3.

**Examples 1-18 and Comparative examples 1-6**

A plurality of pieces of float glass having thicknesses of 2.1 mm and 1.8 mm were prepared and subjected to a heating and softening step, a bending and shaping step and an annealing step to obtain bent outer glass layers 1 with a thickness of 2.1 mm and bent inner glass layers 3 with a thickness of 1.8 mm. PVB with a thickness of 0.76 mm was used as thermoplastic intermediate layers 2. The thermoplastic intermediate layers 2 and the bent outer glass layers 1 and inner glass layers 3 were laminated according to the manufacturing method according to the present application to form laminated glass structures. Heating, vacuuming and/or pressure applying were performed on the laminated glass structures to obtain the front windshields 200 of examples 1-18 and comparative examples 1-6.

The front windshields 200 of the comparative examples 1-2 were subjected to weakening optimization and had first weakened regions 203, but $V2$-$V1$ was less than 0.3 m/s; the front windshields 200 of the comparative examples 3-4 were subjected to weakening optimization and had first weakened regions 203, but $V2$-$V1$ was greater than 2.2 m/s; the front windshields 200 of the comparative examples 5-6 were not subjected to weakening optimization and did not have first weakened regions 203. The front windshields 200 of the examples 1-18 were subjected to weakening optimization, had first weakened regions 203 and met the following condition: 0.3 m/s$\leq V2$-$V1 \leq$2.2 m/s.

The front windshields 200 of the examples 1-18 and the comparative examples 1-6 were tested according to Standard GB24550 using an adult headform impactor. The adult headform impactor impacted the first weakened regions 203 to break the first weakened regions 203, and the adult headform impactor impacted an instrument panel 100 after the first weakened regions 203 were broken; impact curves about impact times and resultant accelerations were obtained using an acceleration sensor and a data acquisition instrument. Breakage phenomena of the front windshields 200 were observed or calculated, and test results were recorded in table 1.

Atypical breakage: at least one of phenomena (1)-(2) as follows occurs;

(1) the adult headform impactor impacts the first weakened region, and integrity of the front windshield is kept for 1 ms or more without being broken;

(2) the first maximum resultant acceleration $a5$ exhibits within 0-5 ms period in the impact curve, and is greater than 180 g;

Typical breakage: 100$\leq$HIC1$\leq$650, HIC2<1,000, and the atypical breakage phenomenon does not occur.

Table 1: Test results of front windshields 200 of examples 1-18 and comparative examples 1-6

|  | V1 (m/s) | V2 (m/s) | V2-V1 (m/s) | First maximum resultant acceleration a5 | HIC1 | HIC2 | Breakage phenomenon |
|---|---|---|---|---|---|---|---|
| Comparative example 1 | 11.1 | 11.0 | 0.1 | 46.2g | 58.2 | 1,453.4 | Completely penetrated |
| Comparative example 2 | 11.1 | 10.9 | 0.2 | 49.8g | 99.8 | 1,084.6 | Completely penetrated |
| Comparative example 3 | 11.1 | 8.8 | 2.3 | 178.1g | 863.8 | 102.5 | Atypical breakage |
| Comparative example 4 | 11.1 | 8.7 | 2.4 | 180.7g | 913.7 | 96.7 | Atypical breakage |
| Comparative example 5 | 11.1 | 8.6 | 2.5 | 183.9g | 1,160 | 89.2 | Atypical breakage |
| Comparative example 6 | 11.1 | 8.4 | 2.7 | 198.5g | 1,255.7 | 77.4 | Atypical breakage |
| Example 1 | 11.1 | 10.8 | 0.3 | 52.3g | 117.1 | 679.2 | Typical |

(continued)

| | V1 (m/s) | V2 (m/s) | V2-V1 (m/s) | First maximum resultant acceleration a5 | HIC1 | HIC2 | Breakage phenomenon |
|---|---|---|---|---|---|---|---|
| | | | | | | | breakage |
| Example 2 | 11.1 | 10.7 | 0.4 | 62.7g | 148.3 | 633.6 | Typical breakage |
| Example 3 | 11.1 | 10.6 | 0.5 | 77.3g | 154.6 | 615.1 | Typical breakage |
| Example 4 | 11.1 | 10.5 | 0.6 | 82.2g | 174.8 | 565.2 | Typical breakage |
| Example 5 | 11.1 | 10.4 | 0.7 | 94.1g | 195.4 | 550.8 | Typical breakage |
| Example 6 | 11.1 | 10.3 | 0.8 | 106.8g | 214 | 528.1 | Typical breakage |
| Example 7 | 11.1 | 10.2 | 0.9 | 122.4g | 223.3 | 492.7 | Typical breakage |
| Example 8 | 11.1 | 10.01 | 1.09 | 131.9g | 234.4 | 473.3 | Typical breakage |
| Example 9 | 11.1 | 9.99 | 1.11 | 117.1g | 252.2 | 457.2 | Typical breakage |
| Example 10 | 11.1 | 9.97 | 1.13 | 170.0g | 301.2 | 430.6 | Typical breakage |
| Example 11 | 11.1 | 9.74 | 1.36 | 164.1g | 348.1 | 404.4 | Typical breakage |
| Example 12 | 11.1 | 9.54 | 1.56 | 107.7g | 361.3 | 387.2 | Typical breakage |
| Example 13 | 11.1 | 9.35 | 1.75 | 172.3g | 415.1 | 327.9 | Typical breakage |
| Example 14 | 11.1 | 9.29 | 1.81 | 167.8g | 498.8 | 251.4 | Typical breakage |
| Example 15 | 11.1 | 9.08 | 2.02 | 156.8g | 570.1 | 178.9 | Typical breakage |
| Example 16 | 11.1 | 9.06 | 2.04 | 171.3g | 576.4 | 158.6 | Typical breakage |
| Example 17 | 11.1 | 9 | 2.1 | 178.9g | 642.2 | 122.5 | Typical breakage |
| Example 18 | 11.1 | 8.9 | 2.2 | 157.7g | 645 | 113.7 | Typical breakage |

As can be seen from Table 1: in the comparative examples 1 and 2, $V2\text{-}V1$ is less than 0.3 m/s, and the first maximum resultant accelerations $a5$ are less than 50 g, and HIC1 values of the comparative examples 1 and 2 are less than 100; the front windshields 200 is completely penetrated in the test process, and then, HIC2 values thereof are greater than 1,000, and although the front windshield 200 causes a small primary injury to the head of a pedestrian, the instrument panel causes a quite serious secondary injury to the head of the pedestrian. In the comparative examples 3-6, $V2\text{-}V1$ is greater than 2.2 m/s, and HIC1 values thereof are greater than 850 and even greater than 1,000; the front windshield 200 is slightly broken during the test; and although HIC2 is small, a serious primary injury is caused to the head of the pedestrian.

In the examples 1-18, $V2\text{-}V1$ satisfies the condition that 0.3 m/s$\leq V2\text{-}V1\leq$2.2 m/s, preferably, 0.6 m/s$\leq V2\text{-}V1\leq$2.0 m/s, and more preferably, 0.8 m/s$\leq V2\text{-}V1\leq$1.81 m/s, the outer glass layers 1 and the inner glass layers 3 of the front windshields 200 can be broken simultaneously or nearly simultaneously after being impacted, and a specific time required for breaking is shortened to within 3 ms, so that the first weakened regions 203 of the front windshields 200 satisfy the conditions that $100 \leq HIC1 \leq 650$ and $HIC2 < 1,000$, and no atypical breakage phenomenon occurs, which is more favorable to reducing the primary injury to the head of the pedestrian from the front windshield 200. As such, on the basis of satisfying the basic requirement of protecting a person in a vehicle, both the primary injury to the head of the pedestrian from the front windshield 200 and the secondary injury to the head of the pedestrian from the instrument panel are reduced, thus ultimately, an overall injury to the pedestrian during impacting the front windshield 200 are reduced. an overall injury to the pedestrian during impacting the front windshield 200 are reduced The first maximum resultant acceleration $a5$ satisfies the condition that $50$ g$\leq a5 < 180$ g, preferably, $80$ g$\leq a5 \leq 170$ g, and more preferably, $100$ g$\leq a5 \leq 150$ g, which is favorable to reducing both the primary injury to the head of the pedestrian from the front windshield 200 and the secondary injury to the head of the pedestrian from the instrument panel, thus significantly reducing a total injury value suffered by the head of the pedestrian.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as falling within the scope of the specification.

The above-described embodiments only illustrate several implementations of the present application, and the descriptions thereof are relatively specific and detailed, but they should not be construed as limiting the scope of the present application. It should be understood that, various modifications and improvements can be made by those of ordinary skill in the art, without departing from the concept of the present application, and all fall within the protection scope of the present application. Therefore, the protection scope of the present patent should be subject to the appended claims, and the description and drawings can be used to explain the content of the claims.

**Claims**

1. A front windshield, mounted on a vehicle comprising an instrument panel, the front windshield comprising:

   an outer glass layer having a first surface and a second surface which are oppositely arranged;
   an inner glass layer having a third surface and a fourth surface which are oppositely arranged; and
   a thermoplastic intermediate layer sandwiched between the second surface and the third surface;
   wherein the front windshield has a first weakened region, the first weakened region is tested using an adult headform impactor, the adult headform impactor is configured to impact the first weakened region to break the first weakened region, and impact the instrument panel after the first weakened region is broken;
   the adult headform impactor has a first velocity $V1$ when in contact with the first surface of the first weakened region, the adult headform impactor has a second velocity $V2$ when the fourth surface of the first weakened region is broken, and $V1$ and $V2$ satisfy the following conditions: $V1 = 11.1 \pm 0.2$ m/s, and $V1\text{-}V2 = 0.3$ m/s-2.2 m/s.

2. The front windshield according to claim 1, wherein $V1\text{-}V2 = 0.6$ m/s-2.0m/s.

3. The front windshield according to claim 1, wherein the adult headform impactor has a first maximum resultant acceleration $a5$ within 0-5 ms period after impacting the first weakened region, and $a5$ is less than or equal to 180 g.

4. The front windshield according to claim 1, wherein the adult headform impactor has a first head injury criterion HIC1 within 0-5 ms period after impacting the first weakened region and a second head injury criterion HIC2 within 5-15 ms period after impacting the first weakened region, wherein $100 \leq HIC1 \leq 650$, and $HIC2 < 1,000$.

5. The front windshield according to claim 4, further comprising a second weakened region, wherein the second weakened region is tested using the adult headform impactor, the adult headform impactor has a third head injury criterion HIC3 within 0-15 ms period after impacting the second weakened region, wherein $HIC3 < 1,000$.

6. The front windshield according to claim 5, comprising a transparent region and a shielding region surrounding the transparent region, wherein a visible light transmittance of the transparent region is greater than or equal to 70%, a visible light transmittance of the shielding region is less than or equal to 10%, and both the first weakened region and the second weakened region are located within the transparent region.

7. The front windshield according to claim 6, wherein the shielding region comprises a top shielding region, a left shielding region, a bottom shielding region and a right shielding region;

a distance between a lower boundary of the first weakened region and the bottom shielding region is denoted by $x$, a distance between a left boundary of the first weakened region and the left shielding region is denoted by $m$, a distance between a right boundary of the first weakened region and the right shielding region is denoted by $n$, a distance between an upper boundary and the lower boundary of the first weakened region is denoted by $h$, wherein $x$ is less than or equal to 15 mm, $m$ is less than or equal to 50 mm, $n$ is less than or equal to 50 mm, and $h$ is equal to 100 mm-300mm;

a distance between an upper boundary of the second weakened region and the top shielding region is denoted by $y$, a distance between a left boundary of the second weakened region and the left shielding region is equal to $m$, a distance between a right boundary of the second weakened region and the right shielding region is equal to $n$, and wherein $y$ is less than or equal to 100mm.

8. The front windshield according to claim 7, wherein a transition weakened region is arranged between a lower boundary of the second weakened region and the upper boundary of the first weakened region; an area of the transition weakened region is less than an area of the first weakened region; the transition weakened region is tested by using the adult headform impactor, the adult headform impactor has a fourth head injury criterion HIC4 within 0-15 ms period after impacting the transition weakened region, wherein HIC4 is greater than HIC1, and HIC4 is less than HIC3.

9. The front windshield according to claim 6, wherein a ratio of an area of the first weakened region to an area of the transparent region is less than or equal to 1/3; a ratio of an area of the second weakened region to the area of the transparent region is less than or equal to 2/3; and the area of the first weakened region is less than the area of the second weakened region.

10. The front windshield according to claim 1, wherein a time required for the adult headform impactor to impact the first weakened region to break the first weakened region is less than or equal to 3 ms.

11. The front windshield according to any one of claims 1 to 10, wherein bending strength of the third surface is greater than bending strength of the second surface, and/or bending strength of the fourth surface is greater than bending strength of the second surface.

12. The front windshield according to any one of claims 1 to 10, wherein a thickness of the thermoplastic intermediate layer located in the first weakened region is in a range of 0.38 mm-0.6 mm.

13. The front windshield according to any one of claims 1 to 10, wherein the thermoplastic intermediate layer has a water content in a range of 0.3%-0.4% or 0.6%-0.7%.

14. The front windshield according to any one of claims 1 to 10, wherein a concentration of tin oxide of the second surface is greater than a concentration of tin oxide of the first surface, and a concentration of tin oxide of the third surface is greater than a concentration of tin oxide of the fourth surface;
    or, the concentration of the tin oxide of the second surface is less than the concentration of the tin oxide of the first surface, and the concentration of the tin oxide of the third surface is less than the concentration of the tin oxide of the fourth surface.

15. The front windshield according to any one of claims 1 to 10, wherein a ratio of a thickness of the outer glass layer to a thickness of the inner glass layer is greater than or equal to 0.75 and less than 1.

16. The front windshield according to any one of claims 1 to 10, wherein a weakening coating is further arranged on at least one of the second surface, the third surface and the fourth surface, and the weakening coating covers at least the first weakened region.

17. A manufacturing method of the front windshield according to any one of claims 1 to 16, comprising:

    step 1: preparing bent outer glass layer and inner glass layer, the outer glass layer having the first surface and the second surface which are opposite, and the inner glass layer having the third surface and the fourth surface which are opposite;
    step 2: preparing the thermoplastic intermediate layer, and sequentially laminating the outer glass layer, the thermoplastic intermediate layer and the inner glass layer to form a laminated glass structure; and
    step 3: heating, vacuumizing and/or applying a pressure to the laminated glass structure to obtain the front windshield, the front windshield having the first weakened region.

18. The manufacturing method according to claim 17, wherein the front windshield has at least one weakened structure, wherein the at least one weakened structure is at least located in the first weakened region, and the weakened structure is formed by using at least one of the following weakening methods:

(1) introducing internal defects between the first surface and the second surface using a laser weakening method;
(2) introducing internal defects between the third surface and the fourth surface using a laser weakening method;
(3) forming microcracks on the second surface by adopting a physical friction weakening method; and
(4) forming fracture patterns on the second surface by adopting a chemical etching weakening method.

19. The manufacturing method according to claim 17, wherein the bent outer glass layer and inner glass layer are obtained by subjecting a flat glass to a heating and softening step, a bending and shaping step and an annealing step; and the heating and softening step, the bending and shaping step and the annealing step satisfy at least one of the following conditions:

(1) a heating temperature in the heating and softening step is in a range of 660°C-750°C;
(2) in the heating and softening step, a convection heating method is adopted to soften the flat glass;
(3) in the heating and softening step, a convection heating method and a radiation heating method are adopted to soften the flat glass;
(4) in the heating and softening step, a surface of the flat glass having a lower concentration of tin oxide faces a heating element;
(5) in the heating and softening step, a heating and softening time of the outer glass layer is longer than that of the inner glass layer;
(6) in the bending and shaping step, a temperature of a bending die for bending the flat glass is higher than or equal to 500°C;
(7) in the annealing step, a blowing air pressure on the outer glass layer is less than that on the inner glass layer; and
(8) in the annealing step, an annealing time of the outer glass layer is longer than that of the inner glass layer.

20. A vehicle, comprising an instrument panel and the front windshield according to any one of claims 1 to 16, and the instrument panel being arranged at a position adjacent to a lower side of the front windshield.

FIG. 1

FIG. 2

FIG. 3

FIG. 4

FIG. 5

FIG. 6

FIG. 7

## INTERNATIONAL SEARCH REPORT

| International application No. |
| --- |
| **PCT/CN2024/126610** |

| A. | CLASSIFICATION OF SUBJECT MATTER |
| --- | --- |

B60J 1/02(2006.01)i; B60J 1/00(2006.01)i; B60R 21/34(2011.01)i; C03C 27/12(2006.01)i; B32B 17/10(2006.01)i; B32B 27/30(2006.01)i; B32B 27/40(2006.01)i; B32B 7/12(2006.01)i; B32B 33/00(2006.01)i; B32B 37/06(2006.01)i; B32B 37/10(2006.01)i; B32B 1/00(2024.01)i; B32B 38/00(2006.01)i; B32B 38/14(2006.01)i

According to International Patent Classification (IPC) or to both national classification and IPC

| B. | FIELDS SEARCHED |
| --- | --- |

Minimum documentation searched (classification system followed by classification symbols)

IPC: B60J B60R C03C B32B

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI: 福耀玻璃, 郭勇, 仪表, 内, 外, 双层, 夹层, 玻璃, 前挡, 挡风, 弱化区, 准确, 人, 头, 冲击, 撞击, 速度, 破裂, head, speed, instrument, meter, surface, vehicle, weaken+, glass, lay, HIC

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117445630 A (FUYAO GLASS INDUSTRY GROUP CO., LTD.) 26 January 2024 (2024-01-26)<br>claims 1-20, description, paragraphs [0004]-[0142], and figures 1-7 | 1-20 |
| A | CN 116512705 A (ANHUI WANWEI UPDATED HIGH-TECH MATERIAL INDUSTRY CO., LTD.) 01 August 2023 (2023-08-01)<br>description, paragraphs [0036]-[0116], and figures 1-6 | 1-20 |
| A | CN 115448583 A (FUYAO GLASS INDUSTRY GROUP CO., LTD.) 09 December 2022 (2022-12-09)<br>entire document | 1-20 |
| A | GB 1221285 A (SAINT-GOBAIN) 03 February 1971 (1971-02-03)<br>entire document | 1-20 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 January 2025** | **29 January 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/126610**

| Patent document cited in search report | | | Publication date (day/month/year) | Patent family member(s) | Publication date (day/month/year) |
|---|---|---|---|---|---|
| CN | 117445630 | A | 26 January 2024 | None | |
| CN | 116512705 | A | 01 August 2023 | None | |
| CN | 115448583 | A | 09 December 2022 | None | |
| GB | 1221285 | A | 03 February 1971 | None | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311384231

**Non-patent literature cited in the description**

- *Standard GB24550*
- *China Standard GB9656*
- *China Standard GB24550*
- *China standard GB24550*